# EUROPÄISCHE PATENTANMELDUNG

(11) **EP 2 090 463 A2**
(43) Veröffentlichungstag der Anmeldung: **19.08.2009**
(21) Anmeldenummer: 09001571.0
(22) Anmeldetag: 05.02.2009
(51) Int. Cl.: B60P 3/077

(54) **Motorradbefestigung**

(30) Priorität: 12.02.2008 AT 2262008
(71) Anmelder: ÖBB-Personenverkehr AG, 1220 Wien (AT)
(72) Erfinder: Schmid, Roman, 1220 Wien (AT); Dieminger, Johann, 1220 Wien (AT)
(74) Vertreter: Puchberger, Peter

(57) **Zusammenfassung**

Die Erfindung betrifft eine Befestigungsvorrichtung für Zweiradfahrzeuge, insbesondere für Motorräder, Motorroller und Mopeds in Transportfahrzeugen wie Eisenbahnwaggons, LKWs und dergleichen, wobei für die Befestigung des Vorderrades eine von der Fahrbahn hochschwenkbare und in ihrer Winkelstellung arretierbare Radstütze vorgesehen ist, **dadurch gekennzeichnet dass** die Radstütze eine an der Fahrbahn angelenkte Parallellenkerkonstruktion ist, wobei an den anderen Enden der Parallellenker eine Radaufnahmegabel in einer zur Fahrbahn parallelen Stellung vorgesehen ist.

## Beschreibung

Die Erfindung betrifft eine Befestigungsvorrichtung für Zweiradfahrzeuge, insbesondere für Motorräder, Motorroller und Mopeds in Transportfahrzeugen wie Eisenbahnwaggons, LKWs und dergleichen, wobei für die Befestigung des Vorderrades eine von der Fahrbahn hochschwenkbare und in ihrer Winkelstellung arretierbare Radstütze vorgesehen ist.

Durch die DE 197 44 889 A1 ist eine zusammenklappbare und überfahrbare Transportbefestigung für Motorräder zum Transport auf den Plattformen von Autoreisezügen bekannt geworden. Diese Konstruktion löst zu einem Teil die grundsätzliche Anforderung, für Zweiradfahrzeuge in bewegten Transportfahrzeugen eine Befestigung in aufrechter Position des Zweiradfahrzeuges vorzusehen. Weiters wird auch das Problem angesprochen, dass die Befestigungsvorrichtung mit Motorrädern oder mehrspurigen Kraftfahrzeugen überfahrbar sein soll , da in derartigen Transportfahrzeugen üblicherweise nicht die Möglichkeit besteht, an der Befestigungsvorrichtung vorbeizufahren. Die sonst üblichen Ständer mit aufrecht stehenden Stehern für die Befestigung der Zweiradfahrzeuge können diese gestellten Aufgaben nicht erfüllen. Die zuvor genannte Konstruktion weist jedoch den Nachteil auf, dass noch immer relativ hoch von der Fahrbahn abstehende Teile vorhanden sind, die in der Praxis ein Überfahren mit einem Auto unmöglich oder für die Reifen gefährlich machen. Überdies ist die gezeigte Konstruktion sehr kompliziert und damit teuer.

Die erfindungsgemäße Aufgabe wird gemäß vorliegender Erfindung dadurch gelöst, dass die Radstütze eine an der Fahrbahn angelenkte Parallellenkerkonstruktion ist, wobei an den anderen Enden der Parallellenker eine Radaufnahmegabel in einer zur Fahrbahn im wesentlichen parallelen Stellung vorgesehen ist. Nach einem weiteren Merkmal ist die Parallellenkerkonstruktion durch je zwei vordere Lenkarme des vorderen Parallellenkers und zwei hintere Lenkarme des hinteren Parallellenkers und die Radaufnahmegabel gebildet, wobei die Anlenkachsen an der Fahrbahn in einem Abstand zueinander versetzt sind, der dem Abstand der Schwenkpunkte der Lenkarme an der Radaufnahmegabel entspricht. Ein besonders bevorzugtes Merkmal ist, dass die Befestigungsvorrichtung in die Fahrbahn zumindest teilweise versenkbar ist, wobei die Fahrbahn durch eine vom Transportfahrzeugboden abstehende und auf dieser befestigte Bodenplatte gebildet sein kann.

Weitere vorteilhafte Merkmale der Erfindung sind den Ansprüchen, der Beschreibung und den Zeichnungen zu entnehmen. Die Erfindung ist nicht auf das dargestellte Ausführungsbeispiel beschränkt.

Nachfolgend wird die Erfindung anhand eines Ausführungsbeispieles näher erläutert. Die Figur 1 zeigt die Aufsicht auf eine Befestigungsvorrichtung mit darauf stehendem Motorrad. Die Figur 2 zeigt die Aufsicht auf die Radstütze zur Abstützung des Vorderrades und damit des gesamten Zweiradfahrzeuges. Die Figur 3 zeigt schematisch in Seitenansicht die Radstütze in hochgeklappter Stellung. Die Figur 4 erläutert in drei Beispielen die Verstellmöglichkeit der Radstütze mit einer Erfindungsvariante in Figur 4c.

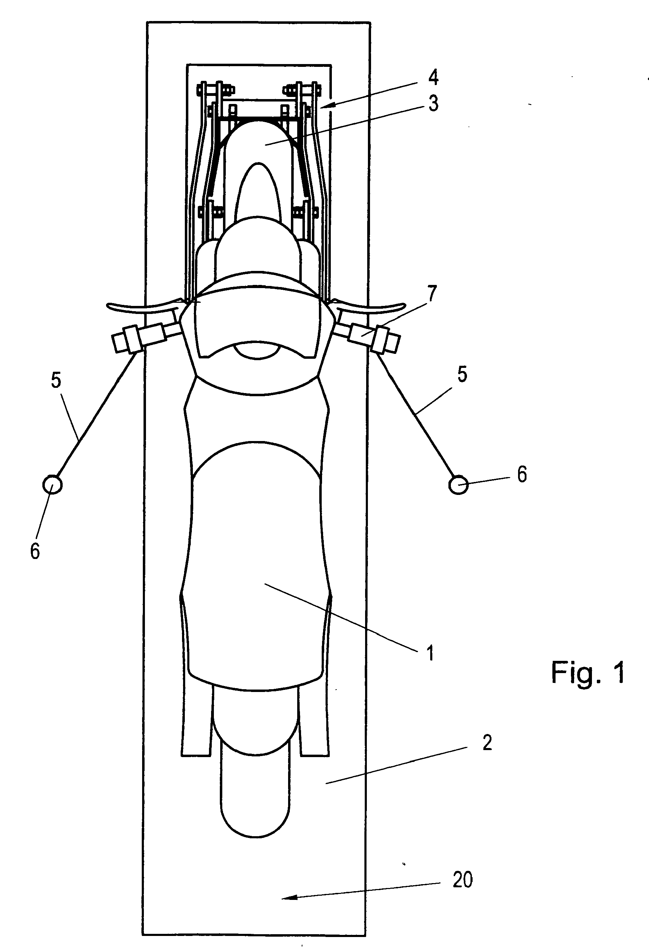

Figur 1 zeigt die Befestigungsvorrichtung für das Zweiradfahrzeug 1, welches auf einer Bodenplatte 2 steht und wobei das Vorderrad 3 von einer Radstütze 4 in aufrechter, insbesondere senkrechter Stellung gehalten ist. Zur weiteren Fixierung des Motorrades sind in bekannter Weise Spannelemente 5 vorgesehen, die zu beiden Seiten des Zweiradfahrzeuges die Lenkstange 7 zur Bodenverankerung 6 verspannen. In der dargestellten Ausführungsform ist die Radstütze 4 oben auf der Bodenplatte 2 angeordnet, sodass die Teile der Radstütze in zusammengeklappten Zustand oben auf der Bodenplatte aufliegen, wobei die Erhebungen über der Bodenplatte nur eine geringfügige Höhe haben, sodass ein Überfahren der Befestigungsvorrichtung mit einem Auto oder einem Zweiradfahrzeug ohne Probleme möglich ist.

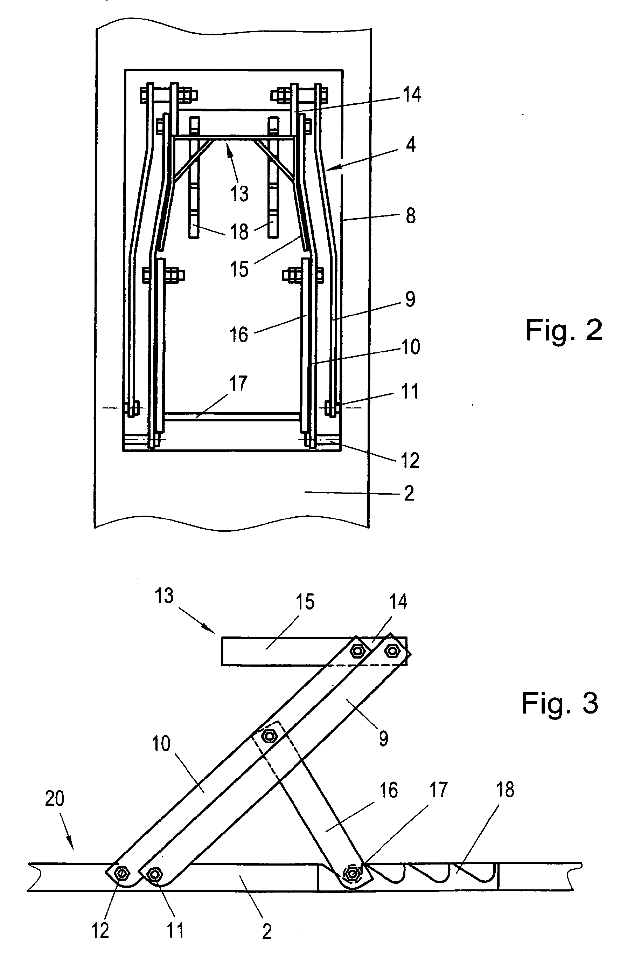

Die Figur 2 zeigt die Befestigungsvorrichtung mit der Radstütze in zusammengeklapptem Zustand, wobei die Bodenplatte 2 eine Ausnehmung 8 aufweist, in die die Radstütze 4 zumindest teilweise und bevorzugt zur Gänze versenkbar ist.

Die Radstütze 4 umfasst eine an der Fahrbahn angelenkte Parallellenkerkonstruktion und umfasst im vorliegenden Ausführungsbeispiel zu beiden Seiten jeweils einen vorderen Lenkarm 9 und einen hinteren Lenkarm 10. Die beiden Lenkarme sind an der Fahrbahn, nämlich an der Bodenplatte 2 durch die Anlenkachsen 11, 12 angelenkt.

Nach vorne hin, also in Einschubrichtung des Vorderrades 3, sind die vorderen und hinteren Lenkarme durch die Radaufnahmegabel 13 verbunden, die einen Abschnitt 14 aufweist, der die Parallellenkerkonstruktion vervollständigt und ein weiterer Abschnitt 15 ist gabelförmig gegen die Einschubrichtung des Vorderrades gerichtet. An den beiden hinteren Lenkarmen 10 ist ein Rastbügel 16 angelenkt, dessen Raststrebe 17 in Rastelemente 18 einrastbar sind.

Die Figur 3 zeigt die Raststütze 4 in hochgeklapptem und eingerastetem Zustand. Wie in der Zeichnung zu erkennen ist, sind die Anlenkachsen 11, 12 in einem Abstand voneinander an der Bodenplatte 2 befestigt, der gleich dem Abstand der Anlenkpunkte am Abschnitt 14 der Radaufnahmegabel 13 ist. Damit ist sichergestellt, dass die Radaufnahmegabel 13 unabhängig von der Schrägstellung der Lenkarme 9 und 10 immer zum Rad gerichtet, bevorzugt waagrecht, steht, also etwa parallel zu der Bodenplatte 2.

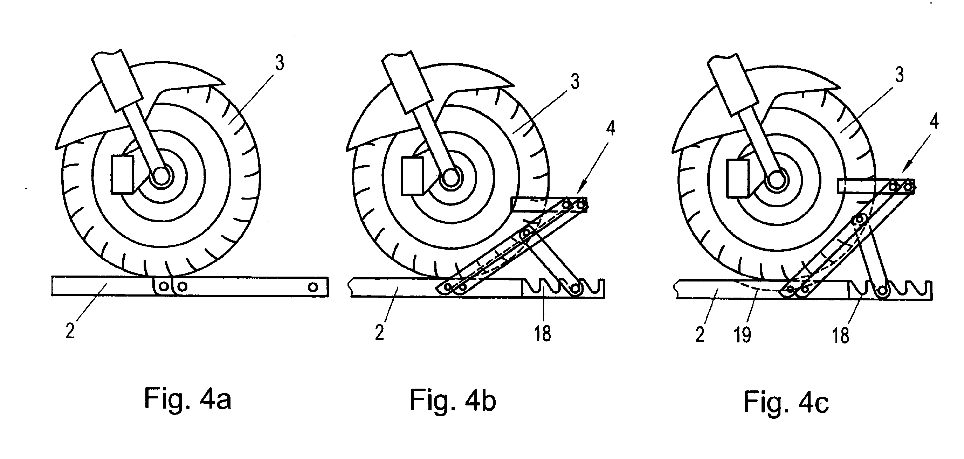

Die Figur 4a zeigt, wie das Vorderrad 3 eines Zweiradfahrzeuges auf die Bodenplatte 2 gestellt wird, um gemäß 4b durch Hochklappen und Arretieren der Radstütze 4 gehalten zu werden. Diese Abstützung des Vorderrades ist in Kombination mit der bekannten Verspannung durch Gurte völlig ausreichend, um ein Motorrad oder ein anderes Zweiradfahrzeug sicher zu befestigen.

In der Ausführung gemäß Figur 4c ist für das Rad 3 eine Radmulde 19 vorgesehen, um die richtige Positionierung des Rades zu erleichtern. Diese Radmulde 19 kann entweder durch die Ausnehmung 8 gegeben sein, oder es kann auch eine zusätzliche Mulde vorliegen, die entweder in der Bodenplatte 2 oder in der darunter liegenden Fahrzeugplattform vorgesehen ist.

Die Spannelemente 5 können Gurte, Seile, Stäbe oder Ketten sein, die zu den Bodenverankerungen gespannt werden.

### Bezugszeichenliste

- 1.: Zweiradfahrzeug
- 2.: Bodenplatte
- 3.: Vorderrad
- 4.: Radstütze
- 5.: Spannelement
- 6.: Bodenverankerung
- 7.: Lenkstange
- 8.: Ausnehmung
- 9.: vorderer Lenkarm
- 10.: hinterer Lenkarm
- 11.: Anlenkachsen
- 12.: Anlenkachsen
- 13.: Radaufnahmegabel
- 14.: Abschnitt
- 15.: Abschnitt gabelförmig
- 16.: Rastbügel
- 17.: Raststrebe
- 18.: Rastelemente
- 19.: Rastmulde
- 20.: Fahrbahn

## Patentansprüche

1. Befestigungsvorrichtung für Zweiradfahrzeuge (1), insbesondere für Motorräder, Motorroller und Mopeds in Transportfahrzeugen wie Eisenbahnwaggons, LKWs und dergleichen, wobei für die Befestigung des Vorderrades (3) eine von der Fahrbahn hochschwenkbare und in ihrer Winkelstellung arretierbare Radstütze (4) vorgesehen ist, **dadurch gekennzeichnet dass** die Radstütze (4) eine an der Fahrbahn (20) angelenkte Parallellenkerkonstruktion ist, wobei an den anderen Enden der Parallellenker (9, 10) eine Radaufnahmegabel (13) in einer zum Rad gerichteten Stellung, bevorzugt etwa parallel zur Fahrbahn, vorgesehen ist.

2. Befestigungsvorrichtung für Zweiradfahrzeuge nach Anspruch 1, **dadurch gekennzeichnet, dass** die Parallellenkerkonstruktion durch je zwei vordere Lenkerarme (9) des vorderen Parallellenkers und zwei hintere Lenkerarme (10) des hinteren Parallellenkers und die Radaufnahmegabel (13) gebildet ist, wobei die Anlenkachsen (11, 12) an der Fahrbahn (20) in einem Abstand zueinander versetzt sind, der dem Abstand der Schwenkpunkte der Lenkarme (9, 10) an der Radaufnahmegabel (13) entspricht.

3. Befestigungsvorrichtung für Zweiradfahrzeuge nach Anspruch 1 oder 2, **dadurch gekennzeichnet, dass** an den hinteren (10) oder vorderen (9) Lenkarmen ein Rastbügel (16) angelenkt ist, dessen Raststrebe (17) in Rastelemente (18) der Fahrbahn einrastbar sind.

4. Befestigungsvorrichtung für Zweiradfahrzeuge nach einem der Ansprüche 1 bis 3, **dadurch gekennzeichnet, dass** die Rastelemente (18) eine Zahnraste sind.

5. Befestigungsvorrichtung für Zweiradfahrzeuge nach einem der Ansprüche 1 bis 4, **dadurch gekennzeichnet, dass** die Befestigungsvorrichtung in die Fahrbahn (20) zumindest teilweise versenkbar ist.

6. Befestigungsvorrichtung für Zweiradfahrzeuge nach einem der Ansprüche 1 bis 5, **dadurch gekennzeichnet, dass** die Fahrbahn durch eine vom Transportfahrzeugboden abstehende und auf dieser befestigte Bodenplatte (2) gebildet ist.

7. Befestigungsvorrichtung für Zweiradfahrzeuge nach einem der Ansprüche 1 bis 6, **dadurch gekennzeichnet, dass** für das durch die Befestigungsvorrichtung gehaltene Vorderrad (3) des Zweiradfahrzeuges (1) eine Rastmulde (19) in der Bodenplatte (2) vorgesehen ist.

8. Befestigungsvorrichtung für Zweiradfahrzeuge nach einem der Ansprüche 1 bis 7, **dadurch gekennzeichnet, dass** zusätzlich zur Radstütze das Zweiradfahrzeug durch Spannelemente (5) wie Seile, Gurten und Ketten zum Transportfahrzeug verspannt ist.
